# EUROPÄISCHE PATENTSCHRIFT

(11) **EP 1 881 575 B1**
(45) Veröffentlichungstag und Bekanntmachung des Hinweises auf die Patenterteilung: **26.08.2009**
(21) Anmeldenummer: 06014845.9
(22) Anmeldetag: 17.07.2006
(51) Int. Cl.: H02B 1/44, H01H 13/14

(54) **Schalter mit einer Kupplung zur Befestigung einer Betätigungsvorrichtung**
Switch with a coupling for the actuator
Interrupteur avec un accouplement pour l'organe de commande

(43) Veröffentlichungstag der Anmeldung: 23.01.2008
(73) Patentinhaber: SIEMENS AKTIENGESELLSCHAFT, 80333 München (DE)
(72) Erfinder: Puri, Werner, Dr., 90429 Nürnberg (DE); Seidl, Joachim, 92237 Sulzbach-Rosenberg (DE)

(56) Entgegenhaltungen:
- DE-A1- 2 256 937
- DE-A1- 3 837 636
- DE-B- 1 155 183
- DE-C- 846 716

## Beschreibung

Die vorliegende Erfindung betrifft einen Schalter mit einer Kupplung zur Befestigung einer Betätigungsvorrichtung, wobei die Kupplung erste Nasen zum passgenauen Einschub zweiter Nasen der Befestigungsvorrichtung, und einen Verriegelungsring mit am inneren Umfang angeformten dritten Nasen zur Arretierung der Befestigungsvorrichtung aufweist.

Ein derartiger Schalter wird in der Regel als elektromechanisches Schaltgerät ausgeführt und findet beispielsweise als Positionsschalter oder Sicherheitsschalter in der Automatisierungstechnik, Anlagenbau und Gebäudetechnik vielseitig Verwendung.

Diese Schalter- bzw. Schaltgeräte dienen unter anderem zur Überwachung von Schutzeinrichtungen, wie beispielsweise Sicherheitstüren, Schutzgitter oder auch zur Überwachung der Bewegung von Maschinenteilen.

Im Wesentlichen bestehen Positionsschalter und Sicherheitsschalter aus einem Schaltergehäuse mit einem daran angebrachten und auch als Antrieb oder Antriebskopf bezeichneten Betätiger. Wird dieser Betätiger, der beispielsweise als Rollenstößel, oder Hebel, als Schwenk- oder Stangenhebel, oder als Federstab, ausgebildet ist, betätigt, so wird ein im Schaltgehäuse angeordnetes und mit dem Betätiger im Wirkverbindung stehendes Schaltelement oder Schaltglied betätigt.

Bei entsprechender Positionierung und Montage wird durch das Betätigen des Betätigers, beispielsweise durch die Bewegung einer Maschine oder das Öffnen einer Schutztür, eine Zwangsöffnung des Schaltglieds und eines daran angeschlossenen Überwachungskreises erzielt.

In der Vergangenheit hat sich die Kraftwirkung auf den Antriebskopf als problematisch erwiesen. Einerseits gilt es, die Kraftwirkung zur Betätigung des Schaltelementes in einer geeigneten, mechanischen Art und Weise auf einen Stößel zu übertragen, der die Schaltung des Schaltelementes auslöst. Andererseits entstehen ungewollte Kraftwirkungen, die durch den Schalter bzw. das den Schalter enthaltende Schaltgerät abgefangen werden müssen und nicht zur Betätigung verwendbar sind.

Bisher wurde das oben genannte Problem beispielsweise durch Schraubbefestigungen gelöst, so dass die Antriebe über Schrauben an dem Gehäuse des Schalters befestigt waren. Dies führte zu einer Vielzahl von verlierbaren Kleinteilen, wie beispielsweise Schrauben, sowie auch zu einer schwierigen und kundenunfreundlichen Demontage bzw. Montage mittels wenigstens eines Werkzeuges.

Ebenfalls wurden so genannte Bajonettverschlüsse zur Befestigung von Antrieben am Gehäuse verwendet. Nachteilig ist hierbei die teure Fertigung des Bajonettverschlusses, die zudem nicht zu einer spielfreien Verbindung führt. Eine formschlüssige Verbindung zwischen dem Antrieb und dem Gehäuse erweist sich in der Praxis allerdings meist als unverzichtbar.

Weiter wurden in der Vergangenheit Schieberverschlüsse entwickelt, mit welchem die Antriebe über einen linear geführten Schieber am Gehäuse befestigt wurden. Zu bemängeln sind in diesem Zusammenhang die geringen Auflageflächen des Antriebes und des Gehäuses, die zu einer geringen Festigkeit der Verbindung führen. Insbesondere erweist sich ein Sicherheits- oder Positionsschalter mit Schieberverschluss als besonders anfällig für Torsionskräfte.

Zur Befestigung von Befehls- und Meldegeräten in einer Einbauöffnung einer Frontplatte sind Kranzkupplungen schon länger bekannt. Hierbei handelt es sich um Kupplungen, die den Betätiger mit dem Schaltelement mechanisch verbinden und die ungewollte Krafteinwirkung über eine Frontplatte abgeleitet wird, weshalb die Kranzkupplung vor etwaigen ungewollten Beschädigungen durch Kraftübertragung nicht geschützt werden musste.

Aus DE 225 69 37 ist eine Kupplung zur Verbindung von Frontelementen mit den Anbauelementen von elektrischen Befehls- und Meldegeräten bekannt. Die Kupplung ist dadurch gekennzeichnet, dass das hinter der Frontplatte befindliche Ende eines Frontelementes als zylindrisches Anschlussstück ausgebildet ist, auf welches ein am Anbauelement angeordneter ringförmiger Käfig aufschiebbar ist, in welchem konzentrisch ein Verriegelungsring drehbar und axial unverschiebbar gelagert ist.

Der Erfindung liegt die Aufgabe zugrunde, einen Schalter, insbesondere einen Positions- oder Sicherheitsschalter anzugeben, der durch die Betätigung auftretende schädliche Krafteinwirkungen vom Antrieb über die Kupplung sicher auf das Schaltergehäuse überträgt und gleichzeitig eine sichere Betätigung des Schaltelementes, sowie eine Benutzerfreundliche Bedienung sicherstellt.

Diese Aufgabe wird bei einem Schalter der eingangs genannten Art dadurch gelöst, dass die Betätigungsvorrichtung als Antriebskopf ausgebildet ist und dass eine aufgrund einer Betätigung des Antriebskopfes entstehende Kraftwirkung über die Kupplung mittels einer Anordnung und/oder Formen der ersten, zweiten und/oder dritten Nasen im Wesentlichen formschlüssig übertragbar ist.

Erfindungsgemäß weist der Schalter eine Betätigungsvorrichtung auf, die über eine Kupplung mit dem Gehäuse des Schalters verbunden ist. Im Gehäuse oder in einem Gehäuseteil sind erste Nasen der Kupplung ringförmig angeordnet. Die dazu passgenauen zweiten Nasen des Antriebskopfes sind zum passgenauen Einschub in die ersten Nasen vorgesehen. Die Kupplung weist zudem einen Verriegelungsring auf, der am inneren Umfang angeformte dritte Nasen aufweist. Der Verriegelungsring kann eine Verriegelungsstellung und eine Entriegelungsstellung einnehmen. Der Verriegelungsring befindet sich in der Entriegelungsstellung, wenn die zweiten Nasen passgenau in die ersten Nasen einschiebbar bzw. ausschiebbar sind. Dies kann beispielsweise für den Fall, dass der Verriegelungsring im Schaltergehäuse einliegt, dadurch erreicht werden, dass die dritten Nasen des Verriegelungsrings mit den ersten Nasen fluchten. Ist der Verriegelungsring zur Einlage am Antrieb vorgesehen, so fluchten in der Entriegelungsstellung die dritten Nasen des Verriegelungsrings mit den zweiten Nasen des Antriebskopfes. Die Verriegelungsposition ist immer dann erreicht, wenn der Ausschub der zweiten Nasen aus den ersten Nasen, bzw. umgekehrt, durch die dritten Nasen verhindert wird. Die bei einer Betätigung des Antriebskopfes entstehende Kraftwirkung kann über die Kupplung mittels einer Anordnung und/oder Formen der ersten, zweiten und/oder dritten Nasen formschlüssig übertragen werden. Ein Teil der Kraftwirkung wird zur Betätigung mindestens eines Schaltelementes verwendet. Ungewollte Kraftwirkungen, wie beispielsweise die Wirkungen einer Torsionskraft, einer zur Einschubrichtung parallelen und/oder senkrechten Kraft, wird durch die im Wesentlichen formschlüssige Kupplung, insbesondere von den zweiten Nasen auf die ersten Nasen übertragen. Insbesondere bei Kraftwirkungen entlang oder entgegengesetzt der Einschubsrichtung können auch die dritten Nasen des Verriegelungsringes zur Übertragung der ungewollten Kraftwirkung vorgesehen sein.

Vorteilhafterweise kann die Kraftübertragung über die Kupplung durch eine entsprechende Anordnung der ersten, zweiten und/oder dritten Nasen optimiert werden. So kann beispielsweise durch eine symmetrische oder asymmetrische Anordnung der ersten, zweiten und/oder dritten Nasen eine lokal auftretende Kraftwirkung sicher aufgefangen werden. Dies gilt insbesondere für Stellen, an denen ein unvorteilhaftes Spiel der Komponenten zu erwarten ist.

Vorteilhafterweise ist die Form der ersten, zweiten und/oder dritten Nasen variierbar, so dass Haft- und Reibungskräfte der beteiligten ersten, zweiten und/oder dritten Nasen optimal ausgenutzt werden. So ist es beispielsweise vorteilhaft, dass die ersten, zweiten und/oder dritten Nasen eine oder mehrere Kraftwirkungen auffangen, die im Wesentlichen senkrecht zu einer Vielzahl von Nasenflächen stehen.

Bei einer vorteilhaften Ausführungsform weist der Verriegelungsring einen Hebel oder zumindest einen Betätigungsbereich auf, der vom Benutzer, insbesondere bei geschlossenem Schaltergehäuse, betätigbar ist. Wichtig in diesem Zusammenhang ist die Tatsache, dass der Benutzer oder der Monteur keine weiteren Werkzeuge benötigt, um beispielsweise den einem höheren Verschleiß unterliegenden Antriebskopf auszuwechseln. Hierbei sind keine unnötigen Montageschritte, wie beispielsweise das Öffnen des Schaltergehäuses, notwendig. Der Benutzer kann vielmehr durch die Betätigung des Hebels bzw. des Betätigungsbereichs den Verriegelungsring von der Verriegelungsposition in die Entriegelungsposition oder umgekehrt bringen.

Gegebenenfalls soll allerdings der Zugriff des Benutzers vermieden werden. Deshalb ist eine Ausführungsform vorteilhaft, bei der der ordnungsgemäß befestigte Deckel den Verriegelungsring unter Verwendung des Betätigungsbereichs in die Verriegelungsstellung zwingt bzw. nur bei dieser Stellung installierbar ist. Der unerwünschte Zugriff durch den Benutzer ist dann beispielsweise mittels ausdrehsicheren Schrauben oder kodierten Schrauben vermeidbar oder bei Plombierschrauben zumindest erkennbar.

Bei einer weiteren vorteilhaften Ausführungsform ist die Kupplung für den Dauerbetrieb mit einer bestimmten Kraftwirkung vorgesehen. Ist der Schalter aufgrund der gewünschten Anwendung einer bestimmten Kraftwirkung ausgesetzt, die im vorhinein bekannt ist, so kann dies bei der Anordnung und/oder der Formen der ersten, zweiten und/oder dritten Nasen berücksichtigt werden, um eine optimale Kraftübertragung auf das Gehäuse zu gewährleisten.

Bei einer weiteren vorteilhaften Ausführungsform ist die Form der ersten, zweiten und/oder dritten Nasen mit mehreren, zur Einschubsrichtung im Wesentlichen parallelen Kanten, ausgestattet. Einerseits dienen die im Wesentlichen parallelen Kanten zur sicheren Führung, aber auch zu einem effektiven Formschluss der Nasen. Weiter wird durch die erhöhte Anzahl der im Wesentlichen parallelen Kanten die Oberfläche der Nasen erhöht, deren Haftkräfte sich vorteilhaft bezüglich der abzufangenden Kraftübertragung vom Antriebskopf auf das Gehäuse auswirken.

Bei einer vorteilhaften Ausführungsform ist die Form der ersten, zweiten und/oder dritten Nasen zumindest teilweise zylinderförmig. Dies erweist sich als vorteilhaft, insbesondere dann, wenn die Richtungen der schädlichen Krafteinwirkungen in vorhinein nicht bekannt sind. Somit könnte ein Schalter mit derartig ausgeformten Nasen als Universalschalter für verschiedene Arten von Antriebsköpfen, die zu unterschiedlichen Kraftwirkungen führen, vermeidbar sein, oder als Schalter eingesetzt werden, bei dem die Betätigung von unterschiedlichen Elementen mit jeweils unterschiedlichen Betätigungsrichtungen auf den Antriebskopf wirken.

Bei einer vorteilhaften Ausführungsform ist die Anordnung der ersten, zweiten und/oder dritten Nasen im Wesentlichen ringförmig symmetrisch oder im Wesentlichen ringförmig asymmetrisch. Hierdurch kann bewerkstelligt werden, dass ein bestimmtes Gehäuse nur für bestimmte Antriebsköpfe vorgesehen ist, deren Anordnung der zweiten Nasen in die Anordnung der ersten Nasen des Gehäuses eingreift. Es wird folglich sichergestellt, dass das Gehäuse nur eine bestimmte Art von Antriebsköpfen unterstützt und somit für eine bestimmte oder mehrere bestimmte Kraftwirkungen ausgelegt ist.

Bei einer weiteren vorteilhaften Ausführungsform ist die Anordnung der ersten, zweiten und/oder dritten Nasen mit zumindest teilweise schräg gestellten ersten, zweiten und/oder dritten Nasen vorgesehen. Mittels der Schrägstellung wird gewährleistet, dass die Haftkräfte und/oder Reibungskräfte optimal genutzt werden, indem die Kraftwirkungen im Wesentlichen senkrecht zu den Nasenflächen ausgerichtet werden.

Allerdings kann ein gewisses Spiel in Randbereichen der Nasenanordnungen, insbesondere der dritten Nasen, von Vorteil sein, da ein Steckenbleiben verhindert bzw. eine leichtere Handhabe des Verriegelungsrings ermöglicht wird. Dieses Spiel kann hierbei durch einen Sturzeinzug realisiert werden, der beim Stanzvorgang während der Herstellung der Nasen erzeugt wird.

Vorteilhafterweise kann die aufgrund einer Betätigung des Antriebskopfes entstehende Kraftwirkung über die Kupplung auf das Schaltergehäuse abgeleitet werden. Hierdurch ergibt sich neben einer mechanisch stabilen und belastbaren Befestigung des Antriebes weiterhin die Möglichkeit, die Kupplung kleiner als beispielsweise bei einem Bajonettverschluss auszuführen, wobei die Tragkraft bzw. die Belastung zumindest gleichwertig ist. Zusätzlich ist die Montage und Demontage des Antriebes bei montiertem Schalter möglich. Hierbei ist der Betätigungsweg des Hebels bzw. des Betätigungsbereiches durch die Formen der ersten, zweiten und/oder dritten Nasen vorgegeben, so dass auch ein kleiner Betätigungsweg zur sicheren Ver- bzw. Entriegelung vorgesehen sein kann und gleichzeitig für den Benutzer einen gewissen Komfort darstellt.

Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der in den Figuren dargestellten Ausführungsbeispiele näher beschrieben und erläutert.

Es zeigen:
- FIG 1: Bauteile eines Ausführungsbeispiels eines Positions- oder Sicherheitsschalters im demontierten Zustand,
- FIG 2: ein erstes Ausführungsbeispiel eines Antriebskopfes,
- FIG 3: ein zweites Ausführungsbeispiel eines Antriebskopfes,
- FIG 4: ein drittes Ausführungsbeispiel eines Antriebskopfes,
- FIG 5: eine Ansicht eines teilweise geschnittenen Positionsschalters,
- FIG 6: eine Ansicht des teilweise geschnittenen Positionsschalters aus Figur 5 mit montiertem Verriegelungsring, und
- FIG 7: ein Positionsschaltersystem.

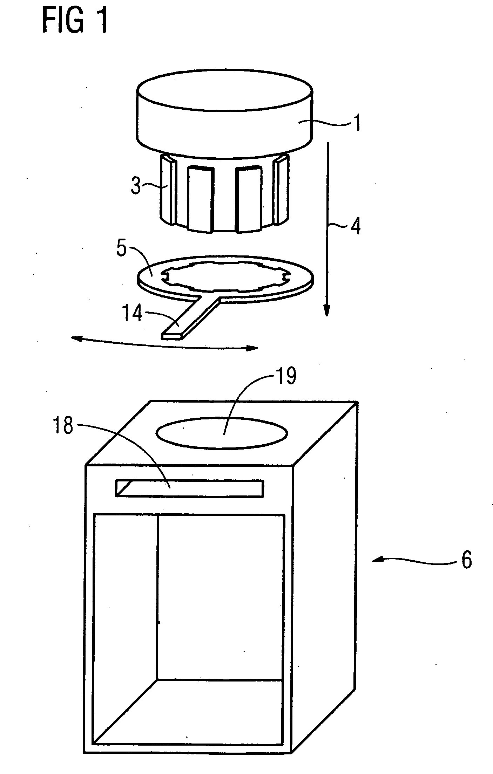

FIG 1 zeigt Bauteile eines Positions- oder Sicherheitsschalters in demontiertem Zustand. Es handelt sich bei den Bauteilen um ein Gehäuse 6, ein Verriegelungsring 4 und ein Antrieb 1 mit zweiten Nasen 3. Beim Antrieb 1 wurde auf die Darstellung der Betätigungsmechanik verzichtet und lediglich auf die Kupplungseigenschaften des Antriebskopfes 1 abgestellt.

In diesem Ausführungsbeispiel ist der Verriegelungsring 4 zum Einschub durch den Schlitz 18 am Gehäuse 6 vorgesehen. In der eingeführten Stellung kann der Verriegelungsring 4 eine Entriegelungs- und eine Verriegelungsposition einnehmen, wobei die dritten Nasen 5 des Verriegelungsringes 4 bei Entriegelung mit den ersten Nasen des Gehäuses (hier nicht abgebildet) fluchten, bzw. bei Verriegelung mit den ersten Nasen zumindest teilweise nicht fluchten.

Das Gehäuse 6 ist am Verwendungsort installierbar und zur Aufnahme eines Schaltelementes vorgesehen. In Entriegelungsstellung ist der Antrieb 1 mit den zweiten Nasen 3 in der Gehäuseöffnung 19 versenkbar. Bei der Versenkung laufen die zweiten Nasen 3, gegebenenfalls passgenau, an den dritten Nasen 5 vorbei. Bei der anschließenden Verriegelung wird der Verriegelungsring 4 mittels des Betätigungsbereichs 14, beispielsweise durch den Benutzer, derartig bewegt, dass sich die dritten Nasen 5 am oberen Ende der zweiten Nasen 3 innerhalb des Gehäuses 6 befinden. Somit sind die zweiten Nasen 3 einerseits durch die dritten Nasen 5 und andererseits durch die ersten Nasen innerhalb des Gehäuses 6 formschlüssig gehalten und eingeschlossen. Der Verriegelungsring 4 verhindert ein ungewolltes Lösen des Antriebs 1 und fängt ungewollte Kraftwirkungen entgegen der Einschubsrichtung auf. Weitere Krafteinwirkungen auf den Antriebskopf werden, sofern sie nicht zur Betätigung verwendbar sind, über den Formschluss insbesondere der ersten und zweiten Nasen vom Antrieb 1 auf das Gehäuse 6 geleitet.

Es erweist sich als äußerst vorteilhaft, dass ohne verlierbare Kleinbauteile eine ungewollte Kraftwirkung sicher vom Antriebskopf 1 auf das Gehäuse 6 übertragbar ist.

Der Benutzer ist nun ohne Weiteres in der Lage, einen beschädigten Antrieb 1 ohne größeren Montageaufwand auszutauschen, oder einen anderen Antrieb, der die gleichen Kupplungseigenschaften aufweist, zusammen mit dem Gehäuse 6 einzusetzen.

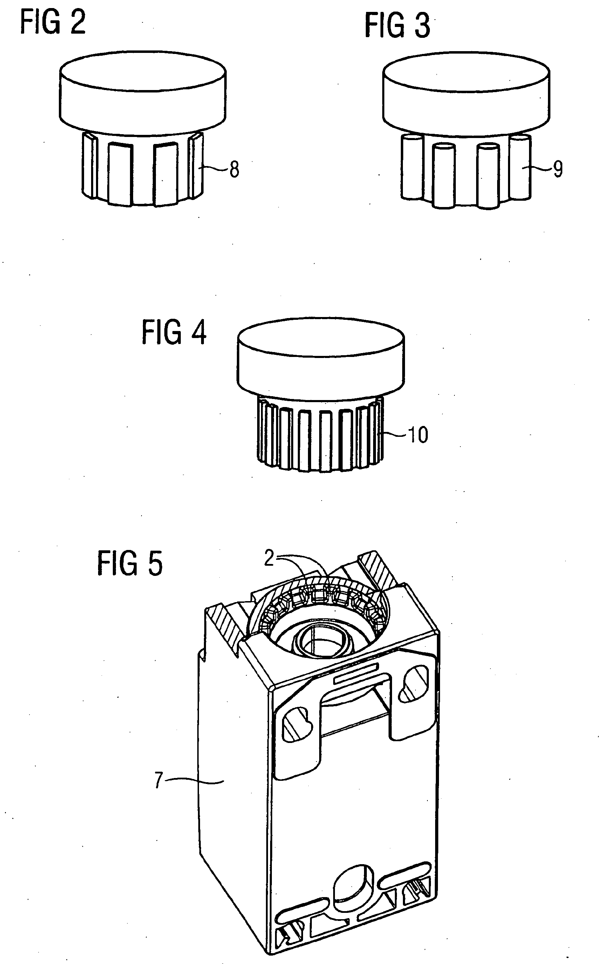

FIG 2, 3, 4 zeigen jeweils ein erstes, zweites und drittes Ausführungsbeispiel eines Antriebskopfes. Hierbei wurden die Anzahl der zweiten Nasen 8, 9, 10 und die Form derselben zum Vorteil der jeweiligen Anwendungen variiert.

So sind beispielsweise die zweiten Nasen 8 quaderförmig ausgeführt und nehmen hierbei in Abhängigkeit von ihrer Position eine bestimmte Stellung ein. Der Vorteil besteht darin, dass die Flächen der zweiten Nasen 8 dahingehend gedreht sind, dass eine optimale Kraftübertragung vom Antrieb auf das Gehäuse bewerkstelligt werden kann. Die Schrägstellung kann durch eine bekannte Kraftwirkung dahingehend realisiert werden, dass einerseits eine große Gesamtfläche zum Auffangen der Kraftwirkung entsteht und andererseits die Kraftwirkung soweit möglich senkrecht zu dieser Gesamtfläche, die sich aus den Einzelflächen der zweiten Nasen 8 zusammensetzt, ausgerichtet wird.

Die zylindrisch ausgeführten zweiten Nasen 9 des zweiten Ausführungsbeispiels ermöglichen eine optimale Kraftaufnahme insbesondere senkrecht zur Einschubsrichtung des Antriebskopfes. Durch die symmetrische ringförmige Anordnung der zweiten Nasen 9 ist der gleiche Formschluss für jede senkrechte Kraftwirkung gegeben. Zusätzlich bewirkt die zylindrische Form der zweiten Nasen 9, dass die Kraft unabhängig von ihrer senkrechten Einwirkungsrichtung weitestgehend auf der Oberfläche der zweiten Nasen 9 senkrecht steht. Dies gewährt eine optimale Kraftübertragung bei einem für derartige Krafteinwirkungen speziell ausgelegten Positionsschalter.

Die zweiten Nasen 10 sind quaderförmig und in hoher Anzahl ringförmig angeordnet. Dies führt zu einem benutzerfreundlichen, kleinen Betätigungsweg des Verriegelungsrings. Zusätzlich ist die Gesamtfläche, die sich aus den Einzelflächen der zweiten Nasen 10 zusammensetzt, sehr hoch. Dies garantiert eine sehr sichere Kraftübertragung aus beliebigen Richtungen senkrecht zur Einschubsrichtung.

FIG 5 zeigt ein Positionsschaltergehäuse. Es ist eine symmetrische Anordnung von ersten Nasen 2 des Gehäuses 7 zu erkennen.

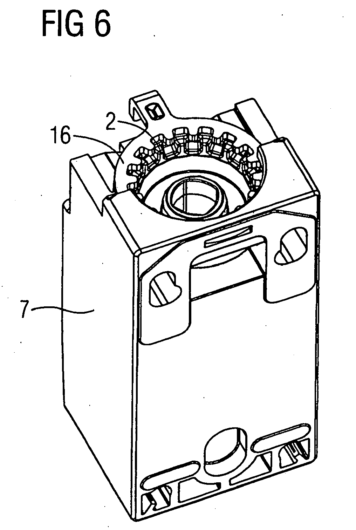

FIG 6 zeigt einen im Gehäuse 7 montierten Verriegelungsring 16 für das in FIG 5 gezeigte Ausführungsbeispiel. Der Verriegelungsring 16 kann gegen Herausfallen über eine geeignete Formgebung, beispielsweise eine Wölbung, oder durch ein zusätzliches Bauteil gesichert werden.

Der Verriegelungsring 16 befindet sich in Verriegelungsstellung, wobei der Antrieb nicht dargestellt ist. Es ist deutlich zu sehen, dass die beteiligten Nasen nicht fluchten. Weiter ist ersichtlich, dass der Betätigungsweg über die Dimensionierung der beteiligten Nasen reguliert werden kann.

Weiterhin kann es vom Vorteil sein, wenn durch eine geeignete Ausprägung des Betätigungsbereiches die Öffnung und Schließung der Kupplung mittels Werkzeug oder per Hand vorgenommen werden kann. Der Einsatz eines Werkzeuges ist beispielsweise dann sinnvoll, wenn eine Öffnung bzw. Schießung durch den Benutzer nicht gewünscht ist.

Bei Sicherheitsschaltern ist es vorteilhaft, den Betätigungsbereich, der beispielsweise als Stift oder Hebel ausgeführt sein kann, im Gehäuse 7 zu versenken, um ein leichtes Öffnen der Verbindung zu verhindern. Alternativ oder zusätzlich kann die Betätigungsbewegung durch das Einführen eines Fixierstücks (nicht gezeigt) gesperrt werden. Das Fixierstück kann hierbei gleichzeitig den Bewegungsbereich des Betätigungsbereichs festlegen, sodass eine Entriegelungstellung und eine Verriegelungsstellung vorgegeben sind. Zudem sind Ausnehmungen am Fixierstück anformbar, um ein Einschnappen des Betätigungsbereichs zu erzielen, wenn die jeweilige Stellung erreicht ist. Denkbar ist ebenfalls, dass das Fixierstück eine Stellungsänderung des Verriegelungsrings 16 völlig blockiert, um Manipulationen des Benutzers zu vermeiden. Der Verriegelungsring wäre dann nur mit entsprechendem Werkzeug (z.B Schraubendreher) entfernbar.

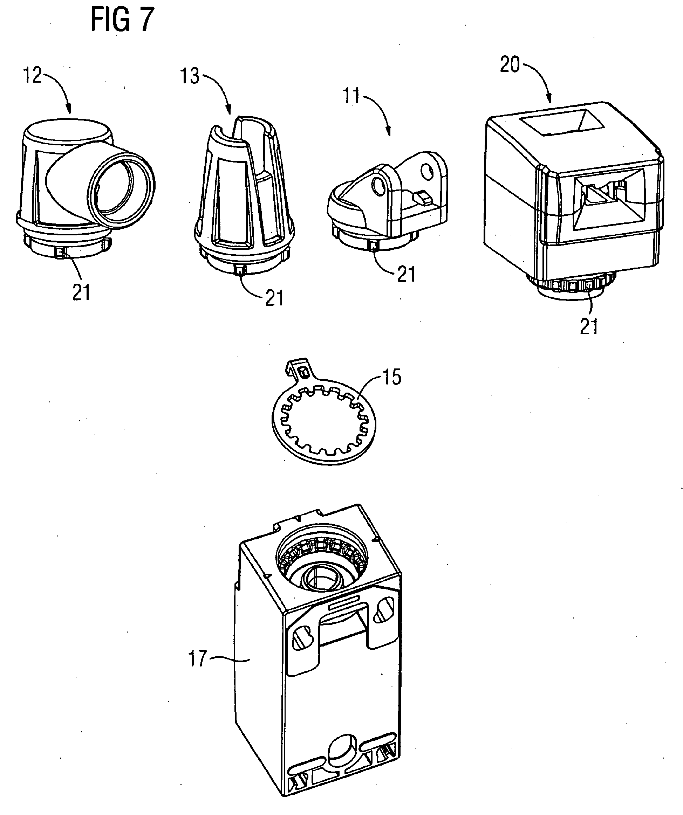

FIG 7 zeigt ein Positionsschaltersystem. Das Positionsschaltersystem besteht aus einem Gehäuse 17, einem Verriegelungsring 15, und vier verschiedenen, zumindest teilweise abgebildeten Antriebsköpfen 11, 12, 13 und 20. Der Verriegelungsring 15 ist in einer ähnlichen Art und Weise (wie in FIG 1 beschrieben) im Gehäuse 17 installierbar. Der Benutzer kann dieses Positionsschaltersystem flexibel einsetzen, da die beteiligten Antriebsköpfe 11, 12, 13, 20 in der bereits beschriebenen Weise beliebig austauschbar sind. Hierbei kann auf die jeweilige Anwendung des Positionsschalters, bzw. auf die entsprechende Kraftwirkung der betätigenden Objekte, wie beispielsweise eine Tür, eine Klappe oder ein bewegliches Maschinenteil Rücksicht genommen werden. Folglich ist die mögliche Anzahl unterschiedlicher Antriebsköpfe 11, 12, 13, 20 nicht begrenzt.

Der Antriebskopf 13 ist vollständig abgebildet und für Betätigungen entlang der Einführungsrichtung vorgesehen. Die Antriebsköpfe 11, 12 sind nur teilweise abgebildet und sind auch für Kraftwirkungen senkrecht zur Einführungsrichtung vorgesehen.

Antriebskopf 20 ist für getrennte Betätiger ausgelegt, die am Objekt direkt befestigt werden. Dieser Antriebkopf 20 weist eine Vielzahl zweiter Nasen 21 auf und ist folglich über den Formschluss der zweiten Nasen 21 nach Installation gegen unerwünschte Krafteinwirkungen des Schutzobjekts besser geschützt als vergleichsweise die Antriebsköpfe 11,12 oder 13, die mit einer geringeren Anzahl für kleinere Kraftwirkungen ausgelegt sind. Die Kraftaufnahmefähigkeit ist folglich mittels der Anzahl der zweiten Nasen 21 regulierbar. Dennoch können Antriebsköpfe unterschiedlicher Anzahl zweiter Nasen 21 mit dem gleichen Gehäuse 17 operieren, sofern immer die passenden Positionen und eine passende Form für die zweiten Nasen 21 verwendet werden.

Zusammenfassend betrifft die Erfindung einen Schalter, insbesondere einen Positionsschalter, mit einer Kupplung zur Befestigung eines Antriebskopfes auf der Basis eines Verriegelungsrings. Es wird eine technische Lehre angegeben, um einen sicheren Betrieb des Schalters zu gewährleisten und gleichzeitig potentiell schädigende Krafteinwirkungen vom Antriebskopf über die Kupplung auf das Gehäuse des Schalters zu leiten. Hierbei werden erste, zweite und dritte Nasen verwendet, durch deren Anordnung bzw. Form eine im Wesentlichen formschlüssige Kraftübertragung realisiert wird. Zudem ist eine optimale Handhabung durch den Benutzer, insbesondere beim Austauschen des Antriebskopfes, gewährleistet.

## Patentansprüche

1. Schalter, insbesondere Positionsschalter, mit einer Kupplung zur Befestigung einer Betätigungsvorrichtung, wobei die Kupplung erste Nasen (2) zum passgenauen Einschub zweiter Nasen (3, 8, 9, 10, 21) der Betätigungsvorrichtung und einen Verriegelungsring (4, 15, 16) mit am inneren Umfang angeformten dritten Nasen (5) zur Arretierung der Betätigungsvorrichtung aufweist, **dadurch gekennzeichnet , dass** die Betätigungsvorrichtung als Antriebskopf (1, 11, 12, 13, 20) ausgebildet ist und dass eine aufgrund einer Betätigung des Antriebskopfes (1, 11, 12, 13, 20) entstehende Kraftwirkung über die Kupplung auf das Schaltergehäuse (6, 7, 17) mittels einer Anordnung und/oder Formen der ersten, zweiten und/oder dritten Nasen (2, 3, 5, 8, 9, 10, 21) im Wesentlichen formschlüssig übertragbar ist.

2. Schalter nach Anspruch 1, wobei der Verriegelungsring (4, 15, 16) einen vom Benutzer, insbesondere bei geschlossenem Schaltergehäuse (6, 7, 17), betätigbaren Betätigungsbereich (14) aufweist.

3. Schalter nach Anspruch 1, wobei eine Stellung des Verriegelungsrings (4, 15, 16) bei ordnungsgemäßer Schalterinstallation, insbesondere bei geschlossenem Schaltergehäuse (6, 7, 17), vorgegeben ist.

4. Schalter nach einem der vorhergehenden Ansprüche, wobei die entstehende Kraftwirkung eine Torsionskraftwirkung und/oder eine Kraftwirkung entlang, entgegengesetzt und/oder senkrecht zur Einschubsrichtung ist.

5. Schalter nach einem der vorhergehenden Ansprüche, wobei die Kupplung für den Dauerbetrieb aus einer bestimmten Richtung einwirkenden Kraft vorgesehen ist.

6. Schalter nach einem der vorhergehenden Ansprüche, wobei die Form der ersten Nasen (2), zweiten Nasen (3, 8, 9, 10, 21) und/oder dritten Nasen (5) mehrere zur Einschubsrichtung im Wesentlichen parallele Kanten aufweist.

7. Schalter nach einem der vorhergehenden Ansprüche, wobei die Form der ersten Nasen (2), zweiten Nasen (3, 8, 9, 10, 21) und/oder dritten Nasen (5) zumindest teilweise zylinderförmig, kugelförmig, kegelförmig oder in ähnlicher Weise ausgeführt sind.

8. Schalter nach einem der vorhergehenden Ansprüche, wobei die Anordnung der ersten Nasen (2), zweiten Nasen (3, 8, 9, 10, 21) und/oder dritten Nasen (5) im Wesentlichen ringförmig symmetrisch oder ringförmig asymmetrisch ist.

9. Schalter nach einem der vorhergehenden Ansprüche, wobei die Anordnung der ersten Nasen (2), zweiten Nasen (3, 8, 9, 10, 21) und/oder dritten Nasen (5) zumindest teilweise schräg gestellte erste, zweite und/oder dritte Nasen (2, 3, 5, 8, 9, 10, 21) aufweist.

10. Schalter nach einem der vorhergehenden Ansprüche, wobei die aufgrund einer Betätigung des Antriebskopfes (1, 11, 12, 13, 20) entstehende Kraftwirkung über die Kupplung auf das Schaltergehäuse (6, 7, 17) ableitbar ist.

11. Schalter nach einem der vorhergehenden Ansprüche, wobei der Verriegelungsring (4, 15, 16) eine Verriegelungserleichterung, insbesondere eine als Stanzeinzug ausgeführte Verriegelungserleichterung, aufweist.

12. Schalter nach einem der vorhergehenden Ansprüche, wobei das Schaltergehäuse (6, 7, 17) ein Gehäuseteil aufweist, welches zur Arretierung des Betätigungsbereichs (14), insbesondere in der Verriegelungsstellung, vorgesehen ist.

13. Schalter nach einem der vorhergehenden Ansprüche, wobei das Gehäuseteil bei Entriegelungsstellung des Verriegelungsrings (4, 15, 16) nicht installierbar ist.

14. Schalter nach einem der vorhergehenden Ansprüche, wobei der Betätigungsbereich (14) beim ordnungsgemäß installierten Schalter an der Rückseite des Schalters angebracht ist.

15. Schalter nach einem der vorhergehenden Ansprüche, wobei ein Fixierstück zur Vorgabe der Verriegelungsstellung und der Entriegelungsstellung des Verriegelungsringes (4, 15, 16) vorgesehen ist.

16. Schalter nach Anspruch 15, wobei das Fixierstück zur taktilen Rückmeldung einer Stellungsänderung mittels eines flexiblen Teils vorgesehen ist.

17. Schalter nach einem der vorhergehenden Ansprüche, wobei das Fixierstück zur Stellungsänderung aus der Verriegelungsstellung heraus nur mittels eines Werkzeugs vorgesehen ist.

18. Schalter nach einem der vorhergehenden Ansprüche, wobei der Schalter als Positions- oder Sicherheitsschalter ausgebildet ist.

## Claims

1. Switch, especially position switch, with a coupling for attachment of an actuating device, with the coupling having first noses (2) for precise insertion of second noses (3, 8, 9, 10, 21) of the actuating device and a locking ring (4, 15, 16) with third noses (5) formed on its inner circumference for locking the actuating device, **characterized in that** the actuating device is embodied as a drive head (1, 11, 12, 13, 20) and that a force effect arising as a result of an actuation of the drive head (1, 11, 12, 13, 20) is able to be transmitted via the coupling to the switch housing (6, 7, 17) by means of an arrangement and/or shapes of the first, second and/or third noses (2, 3, 5, 8, 9, 10, 21) essentially non-positively.

2. Switch according to claim 1, with the locking ring (4, 15, 16) having an actuation area (14) able to be actuated by the user, especially with the switch housing (6, 7, 17) closed.

3. Switch according to claim 1, with a position of the locking ring (4, 15, 16) being predetermined for correct switch installation, especially with a closed switch housing (6, 7, 17) .

4. Switch according to one of the previous claims, with the force effect arising being a torsion force effect and/or a force effect along, in opposition to and/or perpendicular to the direction of insertion.

5. Switch according to one of the previous claims, with the coupling being provided for ongoing operation of a force acting from a particular direction.

6. Switch according to one of the previous claims, with the shape of the first noses (2), second noses (3, 8, 9, 10, 21) and/or third noses (5) having a number of edges essentially parallel to the insertion direction.

7. Switch according to one of the previous claims, where the shape of the first noses (2), second noses (3, 8, 9, 10, 21) and/or third noses (5) is at least partly cylindrical, conical, spherical or similar.

8. Switch according to one of the previous claims, where the first noses (2), second noses (3, 8, 9, 10, 21) and/or third noses (5) are essentially arranged in a symmetrical ring or in an asymmetrical ring.

9. Switch according to one of the previous claims, where the first noses (2), second noses (3, 8, 9, 10, 21) and/or third noses (5) are arranged with first, second and/or third noses (2, 3, 5, 8, 9, 10, 21) positioned at least partly at an angle.

10. Switch according to one of the previous claims, with the force effect arising as a result of actuating the drive head (1, 11, 12, 13, 20) being able to be dissipated via the coupling onto the switch housing (6, 7, 17).

11. Switch according to one of the previous claims, with the locking ring (4, 15, 16) having a locking aid, especially a locking aid embodied as a punched indentation.

12. Switch according to one of the previous claims, with the switch housing (6, 7, 17) having a housing part which is used for latching the actuation area (14), especially in the locking position.

13. Switch according to one of the previous claims, with the housing part not being able to be installed in the unlocking position of the locking ring (4, 15, 16).

14. Switch according to one of the previous claims, with the actuation area (14) being accommodated at the rear of the switch when the switch is correctly installed.

15. Switch according to one of the previous claims, with a fixing piece being provided for specifying the locking position and the unlocking position of the locking ring (4, 15, 16).

16. Switch according to claim 15, with the fixing piece being provided by means of a flexible part for tactile feedback of a position change.

17. Switch according to one of the previous claims, with the fixing part only being intended to be moved out of the locking position by means of a tool.

18. Switch according to one of the previous claims, with the switch being embodied as a position or safety switch.

## Revendications

1. Commutateur, en particulier commutateur de position, avec un accouplement pour la fixation d'un dispositif d'actionnement, l'accouplement comprenant des premiers ergots (2) pour l'introduction ajustée de seconds ergots (3, 8, 9, 10, 21) du dispositif d'actionnement et une bague de verrouillage (4, 15, 16) avec des troisièmes ergots (5) formés sur le pourtour intérieur pour le blocage du dispositif d'actionnement, **caractérisé en ce que** le dispositif d'actionnement est conçu comme tête d'entraînement (1, 11, 12, 13, 20) et **en ce qu'**un effet de force se formant par raison d'un actionnement de la tête d'entraînement (1, 11, 12, 13, 20) peut être transmis essentiellement par complémentarité de formes par l'accouplement au boîtier du commutateur (6, 7, 17) au moyen d'une disposition et/ou des formes des premiers, seconds et/ou troisièmes ergots (2, 3, 5, 8, 9, 10, 21).

2. Commutateur selon la revendication 1, la bague de verrouillage (4, 15, 16) comportant une zone d'actionnement (14) pouvant être actionnée par l'utilisateur, en particulier lorsque le boîtier du commutateur (6, 7, 17) est fermé.

3. Commutateur selon la revendication 1, une position de la bague de verrouillage (4, 15, 16) étant prédéfinie dans le cas d'une installation du commutateur correct, en particulier lorsque le boîtier du commutateur (6, 7, 17) est fermé.

4. Commutateur selon l'une quelconque des revendications précédentes, l'effet de force se formant étant un effet de force de torsion et/ou un effet de force le long, de façon opposée et/ou perpendiculairement par rapport au sens d'introduction.

5. Commutateur selon l'une quelconque des revendications précédentes, l'accouplement étant prévu pour le fonctionnement continu dans le cas d'une force agissant à partir d'une direction définie.

6. Commutateur selon l'une quelconque des revendications précédentes, la forme des premiers ergots (2), des seconds ergots (3, 8, 9, 10, 21) et/ou des troisièmes ergots (5) comportant plusieurs arêtes sensiblement parallèles au sens d'introduction.

7. Commutateur selon l'une quelconque des revendications précédentes, la forme des premiers ergots (2), des seconds ergots (3, 8, 9, 10, 21) et/ou des troisièmes ergots (5) étant réalisée au moins en partie avec une forme cylindrique, une forme sphérique, une forme conique ou de façon similaire.

8. Commutateur selon l'une quelconque des revendications précédentes, la disposition des premiers ergots (2), des seconds ergots (3, 8, 9, 10, 21) et/ou des troisièmes ergots (5) étant sensiblement symétrique avec une forme annulaire ou asymétrique avec une forme annulaire.

9. Commutateur selon l'une quelconque des revendications précédentes, la disposition des premiers ergots (2), des seconds ergots (3, 8, 9, 10, 21) et/ou des troisièmes ergots (5) comportant des premiers, des seconds et/ou des troisièmes ergots (2, 3, 5, 8, 9, 10, 21) placés au moins en partie de façon inclinée.

10. Commutateur selon l'une quelconque des revendications précédentes, l'effet de force se formant en raison d'un actionnement de la tête d'entraînement (1, 11, 12, 13, 20) pouvant être dévié par l'accouplement sur le boîtier du commutateur (6, 7, 17).

11. Commutateur selon l'une quelconque des revendications précédentes, la bague de verrouillage (4, 15, 16) comportant un soulagement de verrouillage, en particulier un soulagement de verrouillage réalisé sous forme de retrait poinçonné.

12. Commutateur selon l'une quelconque des revendications précédentes, le boîtier du commutateur (6, 7, 17) comportant une partie de boîtier qui est prévue pour le blocage de la zone d'actionnement (14), en particulier dans la position de verrouillage.

13. Commutateur selon l'une quelconque des revendications précédentes, la partie de boîtier ne pouvant pas être installée lorsque la bague de verrouillage (4, 15, 16) est dans la position de déverrouillage.

14. Commutateur selon l'une quelconque des revendications précédentes, la zone d'actionnement (14) étant placée sur l'arrière du commutateur lorsque le commutateur est installé correctement.

15. Commutateur selon l'une quelconque des revendications précédentes, une pièce de fixation étant prévue pour prédéfinir la position de verrouillage et la position de déverrouillage de la bague de verrouillage (4, 15, 16).

16. Commutateur selon la revendication 15, la pièce de fixation étant prévue pour l'information en retour tactile d'une modification de position au moyen d'une partie flexible.

17. Commutateur selon l'une quelconque des revendications précédentes, la pièce de fixation étant prévue pour la modification de position à partir de la position de verrouillage uniquement au moyen d'un outil.

18. Commutateur selon l'une quelconque des revendications précédentes, le commutateur étant conçu comme commutateur de position ou commutateur de sécurité.
